# EUROPÄISCHE PATENTSCHRIFT

(11) **EP 2 943 309 B1**
(45) Veröffentlichungstag und Bekanntmachung des Hinweises auf die Patenterteilung: **20.12.2017**
(21) Anmeldenummer: 13704544.9
(22) Anmeldetag: 09.01.2013
(51) Int. Cl.: B23K 26/06, B23K 26/067, G02B 27/09, G02B 27/14, G02B 27/48

(54) **OPTISCHE UMLAUFVORRICHTUNG ZUM EINKOPPELN EINES LASERSPULSES UND VERFAHREN ZUM POSITIONIEREN EINES LASERSTRAHLES**
OPTICAL ROTATING DEVICE FOR INJECTING A LASER PULSE AND METHOD FOR POSITIONING A LASER BEAM
DISPOSITIF OPTIQUE DE RÉVOLUTION SERVANT À INJECTER UNE IMPULSION LASER ET PROCÉDÉ PERMETTANT DE POSITIONNER UN FAISCEAU LASER

(43) Veröffentlichungstag der Anmeldung: 18.11.2015
(73) Patentinhaber: Universität Stuttgart, 70174 Stuttgart (DE)
(72) Erfinder: FRÜCHTENICHT, Johannes, 80339 München (DE)
(74) Vertreter: Müller-Boré & Partner Patentanwälte PartG mbB
(86) Internationale Anmeldenummer: PCT/EP2013/000040
(87) Internationale Veröffentlichungsnummer: WO 2014/108139

(56) Entgegenhaltungen:
- DE-C1- 4 341 553
- JP-A- 2002 096 187
- JP-A- 2002 176 006
- US-A- 4 316 074

## Beschreibung

Die Erfindung betrifft eine optische Umlaufvorrichtung zum Einkoppeln eines Laserpulses und zur ultraschnellen räumlichen Trennung aufeinanderfolgender Laserpulse (siehe Anspruch 1), und ein Verfahren zum Positionieren eines Laserpulses und zur ultraschnellen räumlichen Trennung aufeinanderfolgender Laserpulse (siehe Anspruch 9). In der Industrie kommen zunehmend gepulste Laser zum Einsatz. Um höhere Produktivitäten zu erreichen, wird versucht, das durch Laserstrahlen zu bearbeitende Materialvolumen pro Zeiteinheit zu vergrößern. Dies erfolgt durch eine Leistungsskalierung von Lasersystemen. Die Laserbearbeitungsprozesse erfolgen in der Regel innerhalb eines bestimmten Pulsenergiebereichs. Eine Erhöhung der Durchschnittsleistung muss daher in der Regel mit einer Erhöhung der Pulsrepetitionsrate einhergehen, um die Pulsenergie im gewünschten Bereich zu erhalten.

Gepulste Laserstrahlung für die Materialbearbeitung kann zum Beispiel auf folgende Weisen erzeugt werden: gütegeschaltete Resonatoren, Oszillatoren und (regenerative) Verstärker. Für Kurzpulslaser mit einer kürzeren Pulsdauer als eine Nanosekunde, welche für eine kalte Ablation notwendig sind, kommen gütegeschaltete Resonatoren aufgrund eines zu langsamen Pulsaufbaus nicht in Frage. Oszillatoren erreichen bislang nicht genügend hohe Pulsenergien für breite Anwendungsfelder, weswegen Pulse mit linearen oder regenerativen Verstärkern nachverstärkt werden, wobei die Repetitionsrate verringert wird. Die erzielbaren Durchschnittsleistungen von Oszillatoren steigen aufgrund technologischer Fortschritte stetig an. Industriell einsetzbare Oszillatoren können aus Stabilitätsgründen nur kurze Resonatorlängen aufweisen und geben deswegen ihre Leistung in Pulse mit hoher Repetitionsrate, typischerweise mehrere Megahertz, und vergleichsweise niedriger Pulsenergie ab.

Bei der Materialbearbeitung ergibt sich nun das Problem, dass die Pulse individuell getrennt werden müssen, was schnell genug zwischen den einzelnen Laserpulsen zu erfolgen hat, um auf einem Werkstück an unterschiedlichen Positionen aufzutreffen. Bei der Materialbearbeitung mit Lasern sollen in der Regel verschiedene Stellen des Werkstücks nacheinander mit dem Laser bearbeitet werden. Eine Beispielanwendung betrifft dabei die Kantenisolation von Solarzellen, bei der eine Linie von definiert überlappenden einzelnen Laserpulsen entlang des Werkstücks gezogen wird. Auch bei vielen weiteren Anwendungen, zum Beispiel beim Markieren oder bei Oberflächenbehandlungen, wird der Pulslaserstrahl relativ zur Werkstückoberfläche bewegt. Zur Erzeugung dieser Relativbewegung des Laserpulsstrahls relativ zum Werkstück kann entweder eine Ortsveränderung des Werkstücks erfolgen, was eine langsamere Alternative darstellt, oder ein Scannen des Lasers über das feststehende oder langsam bewegte Werkstück als schnellere Alternative.

Bekannte Laserscannersysteme arbeiten mit beweglichen Optiken, wie zum Beispiel Spiegeln, deren maximale positive und negative Beschleunigung zur Positionierung eines Laserstrahls dem System Geschwindigkeitsgrenzen setzt. Rotierende Prismen, Glaskörper usw. arbeiten zwar mit einer konstanten Geschwindigkeit bzw. Winkelgeschwindigkeit, aber ihre Positioniergeschwindigkeit ist in mechanischer Hinsicht und aus Stabilitätsgründen so begrenzt, dass sie nicht für die oben beschriebenen hohen Repetitionsraten nutzbar sind.

Eine weitere Anwendung gepulster Laser ist in der Mikromaterialbearbeitung zum Beispiel das Bohren von feinen Löchern. Beim Wendelbohren wird eine Optik mit sehr schnell rotierenden optischen Komponenten zur Positionierung von einzelnen Laserpulsen verwendet. Die Strahlpositionierungsgeschwindigkeit ist durch mechanische Faktoren und aus Stabilitätsgründen begrenzt.

Das Dokument DE 43 41 553 C1 und das Dokument JP 2002096187A betrifft jeweils eine Vorrichtung zur Beeinflussung der Charakteristik eines Laserstrahls. Dabei wird in der jeweiligen Vorrichtung ein Laserstrahl bzw. Laserpuls an einem Strahlteiler in zwei Teilstrahlen aufgeteilt, die beim Auskoppeln aus der Vorrichtung wieder zusammengeführt werden. Hierbei ergibt sich eine aufgeweitete Pulsform des ausgekoppelten Laserpulses.

Das Dokument JP 2002 176006, das als nächstliegender Stand der Technik der Ansprüche 1 und 9 angesehen wird, betrifft eine Vorrichtung zur Steuerung der Pulsform eines Laserpulses. Ein Triggersignal verursacht die Emission zweier Laserpulse mit geeigneter Zeitdifferenz und Polarität. Die Laserstrahlen werden aufgeweitet und danach zu einem Laserpuls überlagert.

Der Erfindung liegt die Aufgabe zugrunde, eine Vorrichtung bzw. ein Verfahren bereitzustellen, mit dem eine schnelle Strahlpositionierung für Laserstrahlen, insbesondere gepulste Laserstrahlen, ermöglicht wird.

Diese Aufgabe wird durch die Gegenstände der unabhängigen Ansprüche 1 und 9 gelöst. Ein Aspekt der Erfindung betrifft eine optische Umlaufvorrichtung zum Einkoppeln eines Laserstrahls mit Umlenkvorrichtungen, zwischen denen der eingekoppelte Laserstrahl Umläufe in der optischen Umlaufvorrichtung durchführt, und mit einer Auskoppelvorrichtung zum Auskoppeln des Laserstrahls nach Durchführung einer vorbestimmten Anzahl von Umläufen in der Umlaufvorrichtung. Dabei sind die Umlenkvorrichtungen derart ausgebildet und angeordnet, dass die Position des Laserstrahls beim Auskoppeln von der Anzahl der in der optischen Umlaufvorrichtung durchgeführten Umläufe abhängig ist.

Die optische Umlaufvorrichtung kann einen resonatorähnlichen Aufbau aufweisen, ähnlich zu einem Laserresonator. Die optische Umlaufvorrichtung ist einem herkömmlichen Lasersystem nachgeschaltet und ein in einem herkömmlichen Lasersystem erzeugter Laserstrahl kann in diesen externen optischen Aufbau der Umlaufvorrichtung eingekoppelt werden. Der Aufbau der optischen Umlaufvorrichtung ähnelt einem Resonator zumindest in der Hinsicht, dass der eingekoppelte Laserstrahl die Umlaufvorrichtung pro Umlauf auf fast demselben Weg in einem optischen Aufbau umlaufen kann. Anschaulich kann dies zum Beispiel in einem ringresonatorähnlichem Aufbau erfolgen, den der Laserstrahl mehrmals durchläuft. Die Umlenkvorrichtungen dienen dabei dazu, den Laserstrahl in der Umlaufvorrichtung zu führen. Als Umlenkvorrichtungen können dazu zum Beispiel Spiegel, Reflektoren, Prismen oder ähnliches vorgesehen sein. Nach einer vorbestimmten Anzahl von Umläufen des Laserstrahls in der Umlaufvorrichtung wird der Laserstrahl aus der Umlaufvorrichtung ausgekoppelt. Die Position des Laserstrahls beim Auskoppeln richtet sich dabei nach der Anzahl der in der Umlaufvorrichtung durchgeführten Umläufe. Zum Beispiel kann sich die Strahlposition nach jedem einzelnen Umlauf um ein vorbestimmtes Wegstück in eine vorbestimmte Richtung verschieben, so dass die Strahlposition umso mehr in diese eine vorbestimmte Richtung verschoben wird, je mehr Umläufe der Laserstrahl in der Umlaufvorrichtung durchgeführt hat.

Der Ausdruck, dass die Umlenkvorrichtungen derart ausgebildet und angeordnet sind, dass der Laserstrahl auf eine bestimmte Art geführt wird, ist so zu verstehen, dass die Umlenkvorrichtungen (also zum Beispiel Spiegel etc.) so justiert sind, dass der in der Umlaufvorrichtung eingekoppelte Laserstrahl eine ganz bestimmte Lenkung erfährt, also dementsprechend geführt wird. Im Vergleich zu einem regulären Laserresonator, den der aufzubauende Laserstrahl immer auf exakt demselben Weg durchläuft, ist die optische Umlaufvorrichtung derart ausgestaltet, dass der Laserstrahl pro Umlauf einen leichten räumlichen Versatz erfährt. Gegenüber einem herkömmlichen Laserresonator sind die Umlenkvorrichtungen der Umlaufvorrichtung sozusagen leicht "dejustiert". Diese "Dejustage" ist bei der optischen Umlaufvorrichtung aber gewollt und absichtlich so kalibriert, dass ein eingekoppelter Laserstrahl in der Umlaufvorrichtung pro Umlauf eine leichte Änderung seiner Strahlposition erfährt.

Zum Einkoppeln des Laserstrahls in die optische Umlaufvorrichtung ist kein spezieller Mechanismus notwendig, da die Strahlposition beim Einkoppeln des Laserstrahls geometrisch von den anderen Strahlverläufen nach zumindest einem Umlauf in der optischen Umlaufvorrichtung getrennt ist. Damit kann die Einkopplung zum Beispiel mit einem sogenannten Scraperspiegel erfolgen, d.h. einem Spiegel mit einer Bohrung.

Nach der Einkopplung durchläuft der Laserstrahl den optischen Aufbau der Umlaufvorrichtung. Dabei kann er beliebige optische Komponenten passieren, die in der optischen Umlaufvorrichtung angeordnet sind.

Die Position des Laserstrahls beim Auskoppeln kann dabei die geometrische, also räumliche Position des Laserstrahls bedeuten. Die Position des Laserstrahls betrifft dabei sowohl die exakten Raumkoordinaten im geometrischen Raum als auch den Richtungsvektor der Ausbreitungsrichtung des Laserstrahls beim Auskoppeln. Der Laserstrahl ist gemäß der Erfindung ein Laserpuls, so dass durch die Umlaufvorrichtung gemäß der Erfindung mehrere aufeinander folgende Laserpulse räumlich voneinander getrennt werden können.

Die optische Umlaufvorrichtung trennt die unterschiedlichen Laserpulse nun nicht mehr, wie aus dem Stand der Technik bekannt, durch ein räumliches Verkippen von Lenkungsspiegeln, sondern durch eine unterschiedliche Umlaufanzahl in der Umlaufvorrichtung. Da das Umlaufen der optischen Umlaufvorrichtung in Lichtgeschwindigkeit erfolgt, können aufeinander folgende Lichtpulse wesentlich schneller räumlich voneinander getrennt werden, als dies durch ein unterschiedliches Verkippen eines Ablenkungsspiegels möglich wäre. Damit ermöglicht die optische Umlaufvorrichtung gemäß der Erfindung eine ultraschnelle räumliche Trennung aufeinanderfolgender Laserpulse, zum Beispiel eine räumliche Trennung von Laserpulsen, die mit einer Repetitionsrate von einigen Megahertz bereitgestellt werden.

Dabei ist es zunächst ausreichend, wenn die optische Umlaufvorrichtung die einzelnen Laserpulse um eine sehr geringe räumliche Wegstrecke voneinander trennt, zum Beispiel im Millimeterbereich. Eine weitergehende räumliche Aufspaltung der Laserstrahlen kann der Umlaufvorrichtung in Form einer Optik nachgeschaltet sein, um die von der Umlaufvorrichtung zunächst nur minimal voneinander unterschiedlich positionierten Laserstrahlen anschließend zur Materialverarbeitung weiter zu leiten und zu nutzen.

Ein solches herkömmliches langsames Strahlpositionierungskonzept kann zum Beispiel zu einer Makropositionierung genutzt werden.

Gemäß der Erfindung sind die Umlenkvorrichtungen derart ausgebildet und angeordnet, dass zumindest drei unterschiedliche Positionen des Laserstrahls beim Auskoppeln von drei verschiedenen Anzahlen von in der optischen Umlaufvorrichtung durchgeführten Umläufen abhängig sind. So kann das Auskoppeln des Laserstrahls zum Beispiel nach einem, zwei oder drei Umläufen erfolgen, um drei verschiedene Strahlpositionen voneinander aufzulösen. Genauso gut könnte ein Auskoppeln auch nach zehn, zwanzig oder dreißig Umläufen erfolgen, um die zumindest drei unterschiedlichen Strahlpositionen voneinander zu trennen. Bevorzugt können drei bis zehn unterschiedlichen Positionen des Laserstrahls beim Auskoppeln voneinander getrennt werden, nachdem der Laserstrahl drei bis zehn verschiedene Anzahlen von Umläufen in der optischen Umlaufvorrichtung durchgeführt hat.

Je mehr Strahlpositionen voneinander durch die optische Umlaufvorrichtung trennbar sind, auf umso mehr Werkstückpositionen kann der Laserstrahl zur Materialbearbeitung gelenkt werden.

Gemäß einer Ausführungsform sind die Umlenkvorrichtungen derart ausgebildet und angeordnet, dass ein lateraler Versatz der Position des Laserstrahls beim Auskoppeln von der Anzahl der in der optischen Umlaufvorrichtung durchgeführten Umläufe abhängig ist. So kann der Laserstrahl bei jedem Umlauf einen lateralen Versatz um eine vorbestimmte Wegstrecke erfahren, also pro Umlauf um ein Wegstück in diese Richtung weiter abgelenkt werden.

Dabei könnte die Umlenkvorrichtung insbesondere derart ausgebildet und angeordnet sein, dass der laterale Versatz in zwei Dimensionen erfolgt, also dass die Position des Laserstrahls entweder hintereinander oder gleichzeitig einen lateralen Versatz in zwei Raumrichtungen erfährt. Die Strahlposition wird somit pro Umlauf in der optischen Umlaufvorrichtung nicht nur in eine Richtung lateral versetzt, sondern in zwei. Der Versatz in die zwei Raumrichtungen kann dabei unterschiedlich stark ausgebildet sein.

Gemäß einem Ausführungsbeispiel sind die Umlenkvorrichtungen derart ausgebildet und angeordnet, dass ein Ausstrahlwinkel des Laserstrahls beim Auskoppeln von der Anzahl der in der optischen Umlaufvorrichtung durchgeführten Umläufe abhängig ist. Bei diesem Ausführungsbeispiel erfährt der Laserstrahl pro Umlauf in der Umlaufvorrichtung eine winklige Ablenkung bezüglich seiner Ausbreitungsrichtung.

Gemäß einer Ausführungsvorrichtung sind die Umlenkvorrichtungen derart ausgebildet und angeordnet, dass ein Kreisbahnversatz des Laserstrahls beim Auskoppeln von der Anzahl der in der optischen Umlaufvorrichtung durchgeführten Umläufe abhängig ist. Diese Ausführungsform kann zum Beispiel für ein ultraschnelles Wendelbohrverfahren verwendet werden.

Gemäß einem Ausführungsbeispiel weist die Auskoppelvorrichtung eine Pockelszelle auf. Eine Pockelszelle ist ein elektrooptischer Schalter, der üblicherweise auf dem Pockelseffekt beruht, einem elektrooptischen Effekt. Wird an eine solche Pockelszelle ein elektrisches Feld angelegt, weist sie für die E-Feldkomponenten der sie durchströmenden Strahlung unterschiedliche Brechzahlen auf (Doppelbrechung). Durch Ansteuerung einer Pockelszelle kann somit die Polarisation des sie durchströmenden Lichts beeinflusst bzw. eingestellt werden, insbesondere die Polarisationsrichtung von linear polarisiertem Licht kann so geschaltet werden. Pockelszellen weisen regelmäßig einen doppelbrechenden Kristall auf. Eine Pockelszelle im Sinne der vorliegenden Anmeldung kann auf einem linearen oder nicht linearen elektrooptischen Effekt beruhen. Pockelszellen sind elektrisch sehr schnell schaltbar, so dass zum Auskoppeln zum Beispiel die Polarisation des Laserstrahls in der Umlaufvorrichtung so abgeändert werden kann, dass der Laserstrahl an einem Polarisationsstrahlteiler nach einer vorbestimmten Anzahl von Umläufen in der Umlaufvorrichtung ausgekoppelt wird. Eine solche Pockelszelle ist so schnell schaltbar, dass auch Laserpulse mit sehr hohen Repetitionsraten voneinander getrennt werden können.

Dabei kann die Pockelszelle so angeordnet sein, dass jeder Umlauf des Laserstrahls in der Umlaufvorrichtung durch die Pockelszelle erfolgt. Somit ist eine einzige Pockelszelle ausreichend, um Laserstrahlen nach einer unterschiedlichen Anzahl von durchgeführten Umläufen in der Umlaufvorrichtung auszukoppeln.

Gemäß einer Ausführungsform sind die Umlenkvorrichtungen derart ausgebildet und angeordnet, dass der Umlauf des Laserstrahls in der Umlaufvorrichtung in einer spiralförmigen Bahn erfolgt. Dabei können die Umlenkvorrichtungen den Laserstrahl zum Beispiel in einer dreieckigen oder viereckigen Spiralbahn führen. Pro Umlauf läuft der Laserstrahl aus seiner Spiralbahn auseinander oder zusammen, so dass nach jedem Umlauf in der Umlaufvorrichtung ein räumlicher Versatz der Position des Laserstrahls erzielt wird. Das Verfahren gemäß der Erfindung (siehe Anspruch 9) kann zum Beispiel mit einer optischen Umlaufvorrichtung gemäß dem oben beschriebenen Aspekt der Erfindung durchgeführt werden.

Die Erfindung wird nachfolgend anhand von in Figuren dargestellten Ausführungsbeispielen näher beschrieben.

Es zeigen:
- Figur 1: eine schematische Darstellung einer optischen Umlenkvorrichtung, die einem Ringresonator ähnelt,
- Figur 2: eine schematische Darstellung eines rotierenden Auskoppelschaltelements als Auskoppelmechanismus für eine Umlaufvorrichtung und
- Figur 3: eine weitere schematische Darstellung eines rotierenden Auskoppelschaltelements als Auskoppelmechanismus für eine Umlaufvorrichtung.

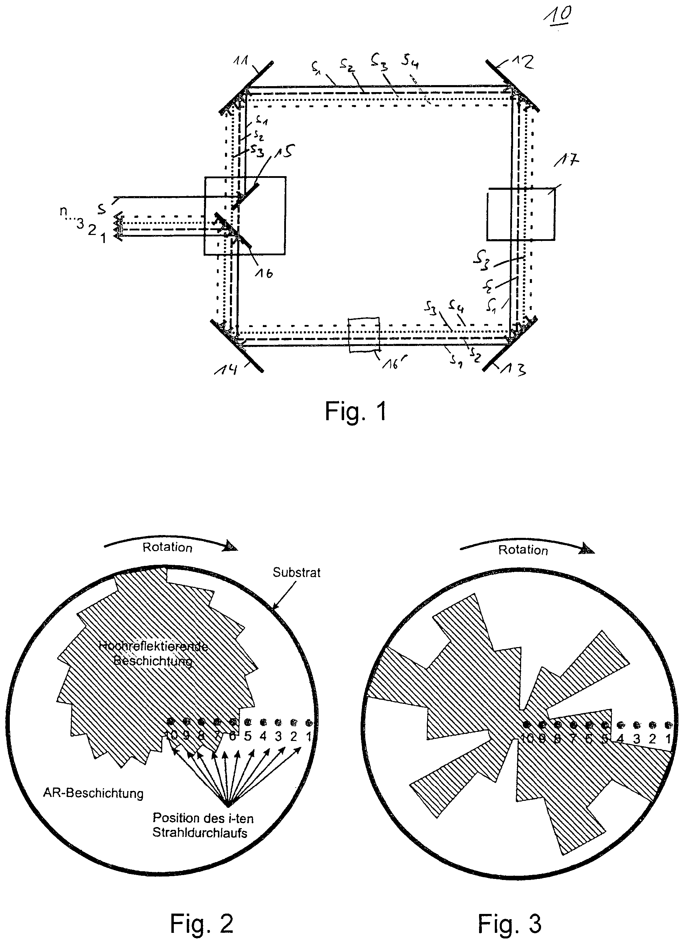

Figur 1 zeigt in einer schematischen Darstellung eine optische Umlaufvorrichtung 10 als optischen Aufbau, der extern von einem Laserresonator als eigenständige Baugruppe ausgebildet ist. Die optische Umlaufvorrichtung 10 ist im Wesentlichen in einem viereckigen Aufbau angeordnet, der von einem Laserstrahl durchlaufen werden kann. Der viereckige Aufbau kann z.B. horizontal angeordnet sein und weist an seinen vier Umlaufeckpunkten vier Umlenkvorrichtungen 11, 12, 13 und 14 auf, die als Umlenkspiegel oder Umlenkprisma ausgebildet sein können.

Ein in die optische Umlaufvorrichtung 10 eingekoppelter Laserstrahl durchläuft den viereckigen Aufbau so lange, bis er wieder aus der Umlaufvorrichtung ausgekoppelt wird. Dabei wird der Laserstrahl an den Umlenkvorrichtungen 11, 12, 13 und 14 so umgelenkt, dass er in der Umlaufvorrichtung 10 verbleibt.

Zum Einkoppeln des Laserstrahls S weist die optische Umlaufvorrichtung 10 einen Einkoppelmechanismus 15 auf. Zum Auskoppeln des Laserstrahl weist die optische Umlaufvorrichtung 10 einen Auskoppelmechanismus 16 auf. Der Einkoppelmechanismus 15 und der Auskoppelmechanismus 16 können einteilig oder mehrteilig ausgebildet sein, z.B. als Pockelszelle mit Dünnschichtpolarisator(en), als akustooptischer Modulator (AOM) und oder als bewegliche Optik.

Weiterhin können im Strahlengang der Umlaufvorrichtung 10 eine oder mehrere weitere optische Komponenten 17 wie Linsen usw. angeordnet sein. Insbesondere ist im Strahlengang der Umlaufvorrichtung 10 ein Polarisationsschalter 16' angeordnet, der die Polarisation von in der Umlaufvorrichtung umlaufender Strahlung so ändern kann, dass die Strahlung am Auskoppelmechanismus 16 ausgekoppelt wird.

Dabei kann der Auskoppelmechanismus 16 als Polarisationsstrahlteiler ausgebildet sein, der Laserlicht einer vorbestimmten Polarisation (z.B. p-Polarisation) transmittieren lässt und somit innerhalb der Umlaufvorrichtung 10 belässt, und der Laserlicht einer anderen Polarisation (z.B. s-Polarisation) aus der Umlaufvorrichtung 10 auskoppelt. Wird der Polarisationsschalter 16' betätigt, so wird das Laserlicht beim nachfolgenden Erreichen des Auskoppelmechanismus 16 aus der Umlaufvorrichtung 10 ausgekoppelt. Der Polarisationsschalter 16' muss nicht als gesondertes Bauteil ausgebildet sein, sondern kann als Bestandteil des Auskoppelmechanismus 16 ausgebildet sein. Der Polarisationsschalter 16' wirkt so mit dem Auskoppelmechanismus 16 zusammen, dass in der Umlaufvorrichtung 10 befindliches Laserlicht nach Durchlaufen einer vorbestimmten Anzahl von Umläufen aus der Umlaufvorrichtung 10 ausgekoppelt wird.

Der Polarisationsschalter 16' kann z.B. als Pockelszelle ausgebildet sein, die von in die Umlaufvorrichtung 10 eingekoppeltem Laserlicht durchdrungen wird. Eine Pockelszelle ist elektronisch und damit besonders schnell schaltbar ausgebildet.

Mittels der in Figur 1 gezeigten optischen Umlaufvorrichtung 10 kann die Position eines externen Laserstrahls S wie folgt beeinflusst werden. Ein Laserstrahl S wird am Einkoppelmechanismus 15 in die Umlaufvorrichtung 10 eingekoppelt. Der eingekoppelte Laserstrahl umläuft die Umlaufvorrichtung 10 als eingekoppelter Laserstrahl S₁ im ersten Umlauf (im gezeigten Ausführungsbeispiel im Uhrzeigersinn). Im ersten Umlauf durchläuft der Laserstrahl S₁ u.A. den Polarisationsschalter 16'. Abhängig von der Ansteuerung des Polarisationsschalters 16' behält der Laserstrahl S₁ im ersten Umlauf entweder seine Polarisation bei oder sie wird verändert. In Abhängigkeit von der Polarisation des Laserstrahl S₁ im ersten Umlauf wird dieser am Auskoppelmechanismus 16 entweder ausgekoppelt, oder als Laserstrahl S₂ in einen zweiten Umlauf durch die Umlaufvorrichtung 10 gelenkt.

Dabei ist die Ausbreitungsposition, also die Strahlposition, des Laserstrahls S₂ im zweiten Umlauf gegenüber der Ausbreitungsposition des Laserstrahl S₁ im ersten Umlauf spätestens bei Erreichen der ersten Umlenkvorrichtung 11 lateral versetzt. Dieser Versatz wird durch eine Dejustage der Umlenkvorrichtungen 11, 12, 13 und 14 gegenüber einer exakten Viereckumlaufjustage bewirkt. Nach jedem weiteren Umlauf durch die Umlaufvorrichtung 10 wird der Laserstrahl S_{X+1} im x+1-ten Umlauf gegenüber dem Laserstrahl S_{X} im vorherigen x-ten Umlauf lateral versetzt. Damit erfolgt ein lateraler Versatz des Laserstrahls in der Umlaufvorrichtung 10 in Abhängigkeit von der Anzahl der durchgeführten Umläufe.

Bei jedem einzelnen Umlauf durchstrahlt der eingekoppelte Laserstrahl den Polarisationsschalter 16', der z.B. als Pockelszelle ausgebildet ist. Dadurch kann bei jedem einzelnen Umlauf ein Umschalten der Polarisation des eingekoppelten Laserstrahls erfolgen. Damit ist die Durchführung einer exakt vorbestimmten Anzahl von Umläufen in der Umlaufvorrichtung 10 einstellbar, abhängig von der Bestriebsstellung des Auskoppelmechanismus 16 bzw. des Polarisationsschalters 16'.

Die Umlaufvorrichtung 10 ist dabei unabhängig von der Art des zur Erzeugung des einzukoppelnden Laserstrahls S' verwendeten Lasersystems und damit für jeden (gepulsten) Laser nutzbar. Somit können beliebige Laserquellen und Laserprozesse in die Umlaufvorrichtung 10 eingekoppelt werden. Die Umlaufvorrichtung 10 erzielt eine ultraschnelle Strahlaufspaltung, die z.B. bei industriellen Prozessen verwendet werden kann.

Der Laserstrahl kann die Umlaufvorrichtung 10 so durchlaufen, dass sein q-Parameter an einer bestimmten Stelle innerhalb der Umlaufvorrichtung 10 nach einem oder mehreren Umläufen reproduziert wird.

Auf einen Einkoppelmechanismus kann in einer Ausführungsvariante auch verzichtet werden, da die Strahlposition geometrisch von den anderen Strahlverläufen getrennt ist.

Die Laserstrahlen müssen dabei nicht, wie in Figur 1 gezeigt, unbedingt parallel und/oder lateral zueinander versetzt die optische Umlaufvorrichtung durchlaufen. So können die Laserstrahlen sich auch durch ihren Strahlungswinkel unterscheiden, was Vorteile an engen Aperturen bieten kann, z.B. am Auskoppelmechanismus, einer optionalen Verstärkung und/oder Abschwächung in der Umlaufvorrichtung, sowie an linearen und nichtlinearen optischen Komponenten.

Weist der Auskoppelmechanismus 16 eine Pockelszelle auf, ist deren Kristall vorzugsweise so groß ausgebildet, dass bei einem Parallelversatz der einzelnen Laserstrahlen alle Laserstrahlen bis zu einer vorbestimmten Anzahl von durchgeführten Umläufen durch die Pockelszelle geleitet werden. Dies ist besonders einfach und kostengünstig bei einem lateralen Parallelversatz der Laserstrahlen realisierbar, da die optischen Oberflächen der Pockelszelle langgestreckt rechteckig ausgeführt werden können, mit geringen Anforderungen an die über den dünnen Kristall der Pockelszelle anzulegende Hochspannung.

Die Umlaufvorrichtung kann so aufgebaut sein, dass die Laserstrahlen bei allen Umläufen die Pockelszelle an derselben lateralen Stelle mit einem leichten individuellen Winkelversatz gegeneinander durchlaufen. Damit lässt sich kostengünstig eine Schaltung mit einer relativ kleinen Pockelszelle oder kleinem AOM als Auskoppelmechanismus realisieren.

Pockelszellen und AOMs erreichen sehr hohe Repetitionsraten, weswegen schnelle Schaltungen für Umlaufvorrichtungen für hochrepetierende Lasersysteme im MHz-Bereich realisierbar sind.

Nachgeschaltet an die Umlaufvorrichtung 10 kann ein herkömmliches (langsames) Strahlpositionierkonzept angeordnet sein, z.B. für eine Makropositionierung des Laserstrahls.

Die Strahlpositionen müssen sich dabei nicht unbedingt durch einen lateralen Parallelversatz unterscheiden. Auch andere Arten einer geometrischen Unterscheidung sind durch die Positionierung und Anordnung der Umlenkvorrichtungen 11, 12, 13 und 14 erzielbar, wie z.B. Strahlungswinkel, unterschiedliche Strahlpositionen auf einer Kreisbahn parallelversetzt, sowie Kombinationen dieser Strahlpositionen.

Die Strahlpositionen können innerhalb und außerhalb der Umlaufvorrichtung anders als auf einer Linie positioniert werden. Z.B. kann eine Umlaufvorrichtung für ein Wendelbohrverfahren vorgesehen sein, bei der Laserstrahlen in Abhängigkeit von der durchgeführten Umlaufanzahl auf einer Kreisbahn rotatorisch versetzt zueinander ausgekoppelt werden. Die Strahlpositionen können innerhalb der Umlaufvorrichtung mit geeigneten optischen Systemen in beliebige Formen auf ein Werkstück gebracht werden, so z.B. zum Wendelbohren in einer Mikromaterialbearbeitung in eine Kreisform und/oder eine Kreissegmentform. Durch eine geeignete Umlaufvorrichtung kann der Anstellwinkel des ausgekoppelten Laserstrahls beim Rotieren (z.B. für ein Wendelbohren) schnell variiert werden.

Die Strahlpositionen der unterschiedlichen ausgekoppelten Laserstrahlen können sich teilweise überlappen. Der optische Aufbau der Umlaufvorrichtung kann so gestaltet sein, dass der q-Parameter des Laserstrahls am Ausgang, an dem der Laserstrahl ausgekoppelt wird, für alle Anzahlen von Strahlungsumläufen gleich ist. Vorteilhaft ist die Umlaufvorrichtung so ausgestaltet, dass der q-Parameter für alle ausgekoppelten Laserstrahlen gleich ist.

Die in Figur 1 gezeigte Umlaufvorrichtung ist spiralförmig in einem Viereck aufgebaut. Alternativ kann die Umlaufvorrichtung in einer dreieckigen oder allgemein in einer vieleckigen Form, mit einer entsprechenden Anzahl von Umlenkvorrichtungen, ausgeführt sein. Die Umlaufvorrichtung kann mit lediglich zwei Umlenkvorrichtungen realisiert sein, wobei die Umlaufvorrichtung im Wesentlichen länglich ausgebildet ist und einem klassischen Laserresonator mit zwei Umlenkspiegeln ähnelt, zwischen denen der Laserstrahl umläuft. In einer solchen länglichen Form lässt sich eine Strahlpositionierung der ausgekoppelten Laserstrahlen in Abhängigkeit der Anzahl der in der Umlaufvorrichtung durchgeführten Umläufe erzielen, z.B. indem Reflektionsflächen der beiden Umlenkvorrichtungen nicht parallel zueinander, sondern leicht versetzt zueinander angeordnet sind.

Als optische Komponente 17 oder zusätzlich zu anderen Komponenten kann ein Gainmedium in der Umlaufvorrichtung angeordnet sein, durch das Verluste bei den Umläufen des Laserstrahls ausgeglichen werden.

Die Auskopplung kann alternativ zur Verwendung einer Pockelszelle mechanisch erfolgen. Dies ist zwar langsamer, aber auch kostengünstiger, da keine teure Pockelszelle benötigt wird. Dafür kann als Auskoppelmechanismus 16 z.B. ein rotierender Spiegel verwendet werden, wie er in Figuren 2 und 3 gezeigt ist.

Figuren 2 und 3 zeigen jeweils eine schematische Darstellung einer Ausführungsform eines rotierenden Auskoppelspiegels als Auskoppelmechanismus 16. Als Spiegelsubstrat kann ein herkömmliches zylinderförmiges Spiegelsubstrat vorgesehen sein. Ein Teilbereich der Spiegeloberfläche ist hochreflektierend beschichtet, während der Rest des Substrats nahezu verlustfrei transmittierend für Laserlicht ausgebildet ist. Strahlpositionen für den ersten bis zehnten Umlauf eines Laserstrahls sind dabei von außen zum Rotationsmittelpunkt des Spiegels hin verlaufend angeordnet. Durchläuft der Laserstrahl einen transmittierenden Bereich des Substrats, der in den Figuren 2 und 3 weiß gezeigt ist, verbleibt der Laserstrahl für zumindest einen weiteren Umlauf in der Umlaufvorrichtung. Durchläuft der Laserstrahl einen reflektierenden Bereich, der in den Figuren 2 und 3 schraffiert dargestellt ist, wird der Laserstrahl ausgekoppelt.

Bei der in Figur 2 gezeigten Spiegelposition würde ein Laserstrahl beim 6ten Umlauf reflektiert und damit ausgekoppelt werden. Bei der in Figur 3 gezeigten Spiegelposition würde ein Laserstrahl beim 5ten Umlauf reflektiert und damit ausgekoppelt werden.

Die in den Figuren 2 und 3 gezeigten Spiegel sind so um ihren Rotationsmittelpunkt rotierbar, dass abhängig von der Spiegelposition ein Laserstrahl nach einer unterschiedlichen Anzahl von Umläufen aus der Umlaufvorrichtung ausgekoppelt wird.

Falls höhere Auskopplungsraten gewünscht sind, kann eine zweite oder dritte Pockelszelle verwendet werden, um die Schaltgeschwindigkeit zu erhöhen.

Weiterhin können weitere Schalter (wie z.B. eine oder mehrere Pockelszellen) in der Umlaufvorrichtung angeordnet sein, um die Richtung eines bei jedem Umlauf durchgeführten lateralen Versatzes der Strahlachse des Laserstrahls um 180° umzukehren. Ein lateraler Versatz um ein eingestelltes Wegstück in eine erste Richtung pro Umlauf kann dabei in einen lateralen Versatz um ein ebenso großes Wegstück in die Gegenrichtung pro nachfolgenden Umlauf umgekehrt werden. Beim i-ten Umlauf nach dieser Strahlumkehr hätte der Laserstrahl somit dieselbe Strahlposition wie beim i-ten Umlauf vor der Strahlumkehr. Damit werden weitere (verschiedene) Umlaufzahlen für die Auskopplung von gleichen Strahlpositionen ermöglicht.

Weiterhin können Schalter (wie z.B. eine oder mehrere Pockelszellen) in der Umlaufvorrichtung angeordnet sein, um die Richtung, um die ein lateraler Versatz der Strahlachse pro Umlauf erfolgt, um 90° zu drehen. Bei nachfolgenden Umläufen nach Betätigung des Schalters erfolgt somit pro Umlauf ein lateraler Versatz der Strahlachse in eine um 90° verdrehte Richtung. Dabei wird ein Einstellen der Strahlposition wie z.B. des Strahlwinkels in zwei Dimensionen ermöglicht

Weiterhin kann ein lateraler Versatz des Laserstrahls in eine zweite Richtung erzielt werden, wodurch die Anzahl der erzielbaren Strahlpositionen beim Auskoppeln quadriert wird. Dazu kann die Umlaufvorrichtung durch eine zweite Unterumlaufvorrichtung ergänzt werden, deren Strahlenachsengang um 90° versetzt zum Strahlenachsengang der ersten Unterumlaufvorrichtung angeordnet ist. Die Umlaufvorrichtung weist somit zwei Unterumlaufvorrichtungen auf. Die Strahlachsen in den beiden Unterumlaufvorrichtungen können dabei unter einem anderen Winkel als 90° zueinander versetzt sein, wobei fein justierbare Auskoppelmuster der Strahlpositionen realisierbar sind, ähnlich zu Moire-Strukturen. Die zweite Unterumlaufvorrichtung kann dabei größer dimensioniert sein, damit die Strahlenumläufe in den beiden Unterumlaufvorrichtungen nicht miteinander wechselwirken. Die Unterumlaufvorrichtungen können alternativ in Serie geschaltet sein, um nacheinander beide Dimensionen der Strahlposition einzustellen.

Ein Werkstück kann der Umlaufvorrichtung nachgeschaltet sein, auf das der ausgekoppelte Laserstrahl abgebildet wird. Auf dem Werkstück kann durch nacheinanderfolgende ausgekoppelte Laserstrahlen mit unterschiedlichen Strahlpositionen eine Art Druckbild erzeugt werden. Dies kann z.B. zum Erzeugen von Druckwalzen genutzt werden oder für andere Anwendungen, bei denen auf einer Fläche ein Muster erzeugt werden soll.

### Bezugszeichenliste

- 10: Umlaufvorrichtung
- 11: Umlenkvorrichtung
- 12: Umlenkvorrichtung
- 13: Umlenkvorrichtung
- 14: Umlenkvorrichtung
- 15: Einkoppelmechanismus
- 16: Auskoppelmechanismus
- 16': Polarisationsschalter
- 17: optische Komponente
- S: externer Laserstrahl
- S₁: Laserstrahl im ersten Umlauf
- S₂: Laserstrahl im zweiten Umlauf
- S₃: Laserstrahl im dritten Umlauf
- S₄: Laserstrahl im vierten Umlauf
- Sₙ: Laserstrahl im n-ten Umlauf

## Patentansprüche

1. Optische Umlaufvorrichtung zum Einkoppeln eines Laserpulses (S) und zur ultraschnellen räumlichen Trennung aufeinanderfolgender Laserpulse mit
- Umlenkvorrichtungen (11, 12, 13, 14), zwischen denen der eingekoppelte Laserpuls Umläufe in der optischen Umlaufvorrichtung (10) durchführt, und
- einer Auskoppelvorrichtung (16) zum Auskoppeln des Laserpulses nach Durchführung einer vorbestimmten Anzahl von Umläufen in der Umlaufvorrichtung (10),
wobei die Umlenkvorrichtungen (11, 12, 13, 14) derart ausgebildet und angeordnet sind, dass die Position des Laserpulses beim Auskoppeln von der Anzahl der in der optischen Umlaufvorrichtung (10) durchgeführten Umläufe abhängig ist und
wobei die Umlenkvorrichtungen (11, 12, 13, 14) derart ausgebildet und angeordnet sind, dass mindestens drei unterschiedliche Positionen des Laserpulses beim Auskoppeln von drei verschiedenen Anzahlen von in der optischen Umlaufvorrichtung (10) durchgeführten Umläufen abhängig sind.

2. Optische Umlaufvorrichtung nach Anspruch 1, wobei die Umlenkvorrichtungen (11, 12, 13, 14) derart ausgebildet und angeordnet sind, dass ein lateraler Versatz der Position des Laserpulses beim Auskoppeln von der Anzahl der in der optischen Umlaufvorrichtung (10) durchgeführten Umläufe abhängig ist.

3. Optische Umlaufvorrichtung nach Anspruch 2, wobei die Umlenkvorrichtungen (11, 12, 13, 14) derart ausgebildet und angeordnet sind, dass in zwei Dimensionen ein lateraler Versatz der Position des Laserpulses beim Auskoppeln von der Anzahl der in der optischen Umlaufvorrichtung (10) durchgeführten Umläufe abhängig ist.

4. Optische Umlaufvorrichtung nach einem der vorangegangenen Ansprüche, wobei die Umlenkvorrichtungen (11, 12, 13, 14) derart ausgebildet und angeordnet sind, dass ein Ausstrahlwinkel des Laserpulses beim Auskoppeln von der Anzahl der in der optischen Umlaufvorrichtung (10) durchgeführten Umläufe abhängig ist.

5. Optische Umlaufvorrichtung nach einem der vorangegangenen Ansprüche, wobei die Umlenkvorrichtungen (11, 12, 13, 14) derart ausgebildet und angeordnet sind, dass ein Kreisbahnversatz des Laserpulses beim Auskoppeln von der Anzahl der in der optischen Umlaufvorrichtung (10) durchgeführten Umläufe abhängig ist.

6. Optische Umlaufvorrichtung nach einem der vorangegangenen Ansprüche, wobei die Auskoppelvorrichtung eine Pockelszelle aufweist.

7. Optische Umlaufvorrichtung nach Anspruch 6, wobei die Pockelszelle so angeordnet ist, dass jeder Umlauf des Laserpulses in der Umlaufvorrichtung (10) durch die Pockelszelle erfolgt.

8. Optische Umlaufvorrichtung nach einem der vorangegangenen Ansprüche, wobei die Umlenkvorrichtungen (11, 12, 13, 14) derart ausgebildet und angeordnet sind, dass der Umlauf des Laserpulses in der Umlaufvorrichtung (10) in einer spiralförmigen Bahn erfolgt.

9. Verfahren zum Positionieren eines Laserpulses und zur ultraschnellen räumlichen Trennung aufeinanderfolgender Laserpulse mit den Schritten:
- Einkoppeln eines Laserpulses (S) in eine optische Umlaufvorrichtung (10) und
- Durchführen einer vorbestimmten Anzahl von Umläufen des Laserpulses in der optischen Umlaufvorrichtung (10) und
- Auskoppeln des Laserpulses aus der Umlaufvorrichtung (10) derart, dass die Position des Laserpulses beim Auskoppeln von der Anzahl der in der optischen Umlaufvorrichtung (10) durchgeführten Umläufe abhängig ist; wobei beim Auskoppeln mindestens drei unterschiedliche Positionen des Laserpulses abhängig sind von drei verschiedenen Anzahlen von in der optischen Umlaufvorrichtung (10) durchgeführten Umläufen.

## Claims

1. An optical rotating device for injecting a laser pulse (S) and for spatially separating successive laser pulses in an ultrafast manner, comprising
- deflection devices (11, 12, 13, 14), between which the injected laser pulse rotates in the optical rotating device (10), and
- an extraction device (16) for extracting the laser pulse after carrying out a predetermined number of rotations in the rotating device (10),
wherein the deflection devices (11, 12, 13, 14) are designed and arranged in such a way that the position of the laser pulse during extraction is dependent on the number of rotations carried out in the optical rotating device (10), and
wherein the deflection devices (11, 12, 13, 14) are designed and arranged in such a way that at least three different positions of the laser pulse during extraction are dependent on three different numbers of rotations carried out in the optical rotating device (10).

2. The optical rotating device according to Claim 1, wherein the deflection devices (11, 12, 13, 14) are designed and arranged in such a way that a lateral offset of the position of the laser pulse during extraction is dependent on the number of rotations carried out in the optical rotating device (10).

3. The optical rotating device according to Claim 2, wherein the deflection devices (11, 12, 13, 14) are designed and arranged in such a way that in two dimensions a lateral offset of the position of the laser pulse during extraction is dependent on the number of rotations carried out in the optical rotating device (10).

4. The optical rotating device according to any one of the preceding claims, wherein the deflection devices (11, 12, 13, 14) are designed and arranged in such a way that a beam angle of the laser pulse during extraction is dependent on the number of rotations carried out in the optical rotating device (10).

5. The optical rotating device according to any one of the preceding claims, wherein the deflection devices (11, 12, 13, 14) are designed and arranged in such a way that a circular path offset of the laser pulse during extraction is dependent on the number of rotations carried out in the optical rotating device (10).

6. The optical rotating device according to any one of the preceding claims, wherein the extraction device has a Pockels cell.

7. The optical rotating device according to Claim 6, wherein the Pockels cell is arranged in such a way that each rotation of the laser pulse in the rotating device (10) passes through the Pockels cell.

8. The optical rotating device according to any one of the preceding claims, wherein the deflection devices (11, 12, 13, 14) are designed and arranged in such a way that the rotation of the laser pulse in the rotating device (10) is carried out in a spiral-shaped path.

9. A method for positioning a laser pulse and for spatially separating successive laser pulses in an ultrafast manner, comprising the steps of:
- injecting a laser pulse (S) into an optical rotating device (10), and
- carrying out a predetermined number of rotations of the laser pulse in the optical rotating device (10), and
- extracting the laser pulse from the rotating device (10) in such a way that the position of the laser pulse during extraction is dependent on the number of rotations carried out in the optical rotating device (10); wherein during extraction at least three different positions of the laser pulse are dependent on three different numbers of rotations carried out in the optical rotating device (10).

## Revendications

1. Dispositif optique de révolution pour le couplage d'une impulsion laser (S) et pour la séparation spatiale ultrarapide d'impulsions laser successives comprenant
- des dispositifs de déviation (11, 12, 13, 14) entre lesquels l'impulsion laser couplée réalise des révolutions dans le dispositif optique de révolution (10), et
- un dispositif de découplage (16) pour le découplage de l'impulsion laser après réalisation d'un nombre prédéfini de révolutions dans le dispositif de révolution (10),
dans lequel les dispositifs de déviation (11, 12, 13, 14) sont réalisés et disposés de telle sorte que la position de l'impulsion laser lors du découplage dépend du nombre des révolutions réalisées dans le dispositif optique de révolution (10), et dans lequel les dispositifs de déviation (11, 12, 13, 14) sont réalisés et disposés de telle sorte qu'au moins trois positions différentes de l'impulsion laser lors du découplage dépendent de trois nombres différents de révolutions réalisées dans le dispositif optique de révolution (10).

2. Dispositif optique de révolution selon la revendication 1, dans lequel les dispositifs de déviation (11, 12, 13, 14) sont réalisés et disposés de telle sorte qu'un décalage latéral de la position de l'impulsion laser lors du découplage dépend du nombre des révolutions réalisées dans le dispositif optique de révolution (10).

3. Dispositif optique de révolution selon la revendication 2, dans lequel les dispositifs de déviation (11, 12, 13, 14) sont réalisés et disposés de telle sorte qu'un décalage latéral de la position de l'impulsion laser dans deux dimensions lors du découplage dépend du nombre des révolutions réalisées dans le dispositif optique de révolution (10).

4. Dispositif optique de révolution selon une des revendications précédentes, dans lequel les dispositifs de déviation (11, 12, 13, 14) sont réalisés et disposés de telle sorte qu'un angle d'émission de l'impulsion laser lors du découplage dépend du nombre des révolutions réalisées dans le dispositif optique de révolution (10).

5. Dispositif optique de révolution selon une des revendications précédentes, dans lequel les dispositifs de déviation (11, 12, 13, 14) sont réalisés et disposés de telle sorte qu'un décalage de trajectoire circulaire de l'impulsion laser lors du découplage dépend du nombre des révolutions réalisées dans le dispositif optique de révolution (10).

6. Dispositif optique de révolution selon une des revendications précédentes, dans lequel le dispositif de découplage présente une cellule de Pockels.

7. Dispositif optique de révolution selon la revendication 6, dans lequel la cellule de Pockels est disposée de sorte que chaque révolution de l'impulsion laser dans le dispositif de révolution (10) s'effectue à travers la cellule de Pockels.

8. Dispositif optique de révolution selon une des revendications précédentes, dans lequel les dispositifs de déviation (11, 12, 13, 14) sont réalisés et disposés de telle sorte que la révolution de l'impulsion laser dans le dispositif de révolution (10) s'effectue dans une trajectoire en forme de spirale.

9. Procédé pour le positionnement d'une impulsion laser et pour la séparation spatiale ultrarapide d'impulsions laser successives avec les étapes de :
- couplage d'une impulsion laser (S) dans un dispositif optique de révolution (10), et
- réalisation d'un nombre prédéfini de révolutions de l'impulsion laser dans le dispositif optique de révolution (10), et
- découplage de l'impulsion laser du dispositif de révolution (10) de telle sorte que la position de l'impulsion laser lors du découplage dépend du nombre des révolutions réalisées dans le dispositif optique de révolution (10) ;
dans lequel au moins trois positions différentes de l'impulsion laser lors du découplage dépendent de trois nombres différents de révolutions réalisées dans le dispositif optique de révolution (10).
